# EUROPEAN PATENT SPECIFICATION

(11) **EP 3 153 731 B1**
(45) Date of publication and mention of the grant of the patent: **11.08.2021**
(21) Application number: 16192522.7
(22) Date of filing: 06.10.2016
(51) Int. Cl.: F16D 1/10

(54) **TORQUE TRANSMISSION COUPLING AND TORQUE TRANSMISSION UNIT COMPRISING SUCH COUPLING**
DREHMOMENTÜBERTRAGUNGSKUPPLUNG UND DREHMOMENTÜBERTRAGUNGSEINHEIT MIT EINER SOLCHEN KUPPLUNG
ACCOUPLEMENT DE TRANSMISSION DE COUPLE ET UNITÉ DE TRANSMISSION DE COUPLE COMPRENANT UN TEL ACCOUPLEMENT

(30) Priority: 06.10.2015 IT UB20154130
(43) Date of publication of application: 12.04.2017
(73) Proprietor: Hydro-Mec S.p.A., 36050 Sovizzo (VI) (IT)
(72) Inventor: SPEGGIORIN, Stefano, 36050 Sovizzo (VI) (IT); LEVIO, Alessandro, 36010 Monticello Conte Otto (VI) (IT)
(74) Representative: Marchioro, Paolo

(56) References cited:
- EP-A1- 1 736 686
- WO-A1-2005/085666
- US-A- 3 552 145
- US-A- 4 172 369

## Description

The present invention regards a coupling for transmitting the torque between a driving shaft and a driven shaft, particularly suitable to connect an electric motor to a speed reducer.

The present invention also regards a torque transmission unit comprising the aforementioned coupling.

As known, a speed reducer is a torque transmission device comprising an input shaft and an output shaft, connected to each other through a series of gears.

Typically, a speed reducer is used for connecting a motor to a machine, so as to adapt the number of revolutions of the motor to the needs of the machine.

The connection occurs by introducing the driving shaft directly into a corresponding hole of the input shaft of the speed reducer and integrally joining the two shafts by means of a tab and/or by fastening the input shaft on the driving shaft through screw means.

The aforementioned direct connection reveals a first drawback lying in that it requires a different speed reducer for each motor size.

As a matter of fact, according to the regulations, two motors of different sizes have different shaft diameters and, thus, require two different speed reducers, which differ from each other by the diameter of the hole of the input shaft that receives the driving shaft.

Thus, whenever there arises the need to replace the motor of a pre-existent machine with a motor of different size, one has to replace the speed reducer, hence increasing costs.

A further drawback of the aforementioned direct connection lies in the fact that, should the hole of the input shaft or of the seat for the tab be damaged, the speed reducer has to be repaired or replaced, thus incurring the relative costs. The direct connection reveals a further drawback lying in the fact that it hinders separation between the motor and the reducer in cases where, following an extended or massive use of the gear motor, the tab adheres to the input shaft. Document EP 1736686 describes a further type of direct connection that applies a male/female coupling.

It is known that the aforementioned drawbacks can be overcome by connecting the motor to the speed reducer by means of an intermediate coupling, comprising a connection element interposed between the motor and the input shaft of the speed reducer.

In this case, the input shaft of the reducer has a special profile configured to be coupled to the aforementioned connection element so as to receive the torque thereof.

The connection by means of the coupling enables obtaining various sizes of the connection element which, though provided on one side of the same profile for coupling to the aforementioned special input shaft, they have - on the opposite side - different profiles for respectively coupling to motors of different sizes.

Thus, a same speed reducer can be coupled to motors of different sizes by simply changing the size of the connection element.

In addition, given that the seat of the tab belongs to the connection element, any damage on such seat could be solved by simply replacing the connection element with another identical one, without having to intervene on the speed reducer.

In addition, any adhesion of the tab to the seat of the connection element does not hinder the separation of the motor from the speed reducer.

Couplings of the aforementioned type are described for example in documents US 3,552,145, US 4,172,369 and WO 2005/085666.

Despite the aforementioned advantages, the couplings of the known type have a considerable overall dimension which requires increasing the distance between the motor and the speed reducer with respect to that corresponding to a direct connection, thus jeopardising interchangeability between a special speed reducer and a standard speed reducer.

A further drawback of the couplings of the known type lies in that their connection profiles have rather complex shapes, which are obtained at a relatively high cost.

The present invention aims at overcoming all the aforementioned drawbacks, regarding the couplings of the known type.

In particular, an object of the present invention is to provide a coupling for transmitting the torque between a driving shaft and a driven shaft, in particular between the shaft of a motor and the input shaft of a speed reducer, whose overall dimension does not exceed that of a direct connection between the driving shaft and the driven shaft.

Another object of the invention provides for that the coupling does not require support components different from the ones used for the direct connection. Lastly, a further object of the invention provides for that the coupling be obtained in a more economic manner with respect to the couplings of the known type.

The aforementioned objects are attained by a coupling obtained according to the main claim.

The aforementioned objects are also attained by a unit for transmitting the torque comprising the aforementioned coupling according to claim 11.

Further detailed characteristics of the invention are outlined in the relative dependent claims.

Advantageously, given that the coupling has the same axial overall dimension as a direct connection, it guarantees the interchangeability of a transmission unit with a coupling with a transmission unit without a coupling, considering the same diameter of the driving shaft.

Still advantageously, the possibility of using, for supporting the coupling, the same components used for supporting the direct connection enables limiting design, manufacturing and storage costs for the manufacturer of the transmission unit.

These and other objects and advantages to be mentioned hereinafter shall be outlined in the following description of some embodiments of the invention, provided solely by way of non-limiting example, with reference to the attached drawings wherein:
- fig. 1 represents the coupling of the invention, in axonometric view;
- fig. 2 represents the coupling of fig. 1, in exploded view;
- fig. 3 represents a component of the coupling of fig. 1, in top view;
- fig. 4 represents the component of fig. 3, in front view;

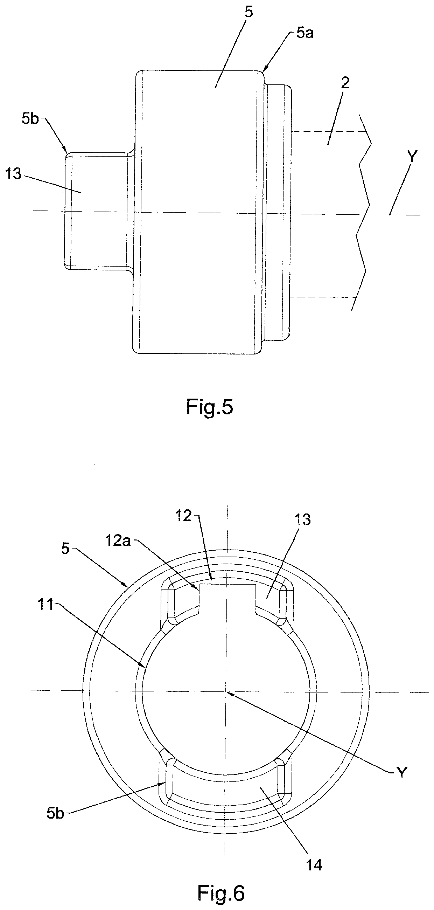

- fig. 5 represents another component of the coupling of fig. 1, in top view;
- fig. 6 represents the component of fig. 5, in front view.

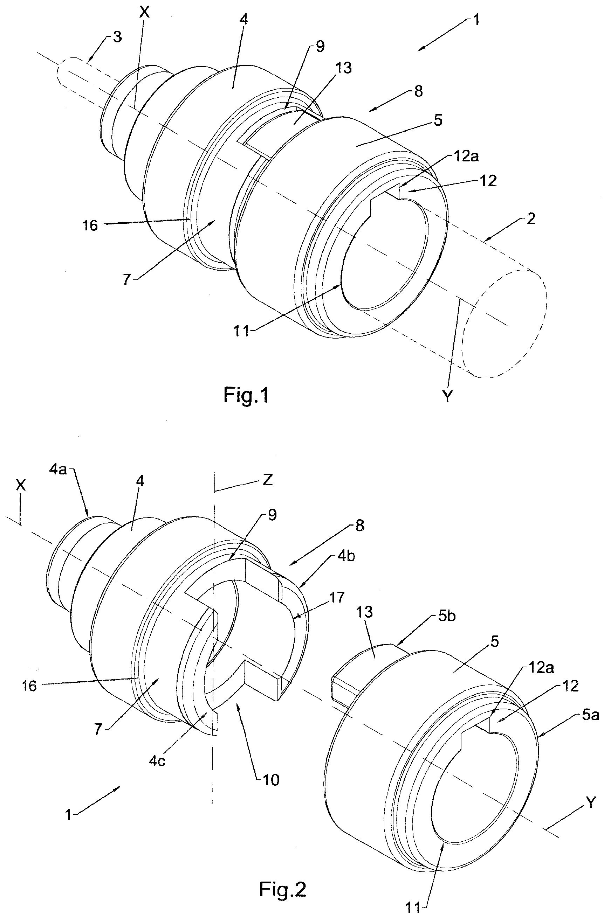

The coupling of the invention, indicated in its entirety in fig. 1 with reference **1,** is suitable to transmit the torque between a driving shaft **2** and a driven shaft **3,** both indicated with a dashed line.

Preferably, the driving shaft **2** belongs to a motor, electric for example, not represented in the drawings but per se known.

Still preferably, the driven shaft **3** belongs to a speed reducer, not represented in the drawings but per se known, configured to transform the rotary motion of the driven shaft **3** into a rotary motion - at a different speed - of a secondary shaft, not represented in the drawings, associated to the driven shaft **3** through a series of gears.

Evidently, the coupling **1** may be used for coupling a driving shaft **2** to a driven shaft **3** belonging to any devices, even different from the described ones.

As observable in particular in figures 2 to 4, the coupling **1** comprises a first coupling element **4** which develops according to a first longitudinal axis **X,** preferably but not necessarily in form of a succession of coaxial cylindrical portions having diameters different from each other.

The first coupling element **4** is provided with a first end **4a,** corresponding to a first of the aforementioned cylindrical portions, of first rotational constraint means **6** which enable the connection to the driven shaft **3** so that the first longitudinal axis **X** is coaxial to the axis of the driven shaft **3** and so as to transmit the torque between the two elements.

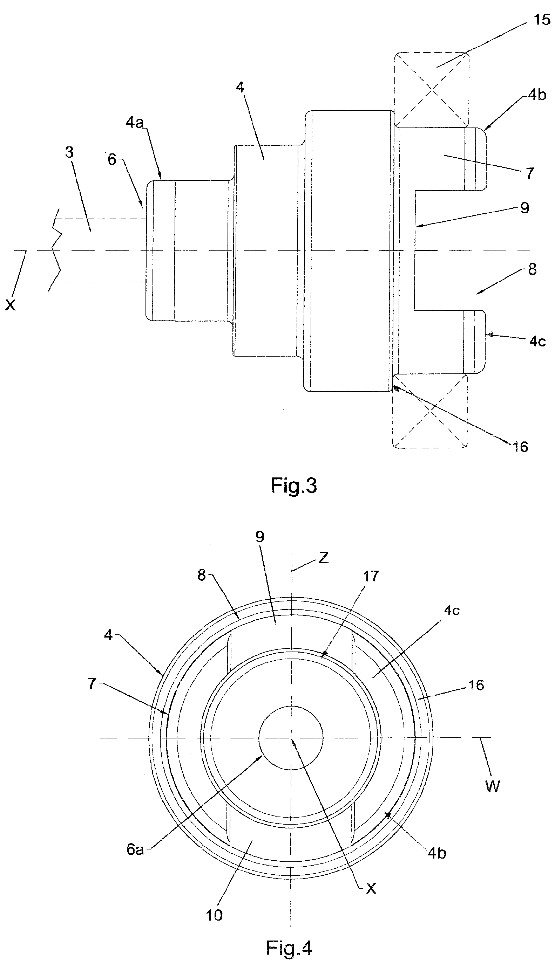

Preferably and as observable in fig. 4, the aforementioned first rotational constraint means **6** comprise a hole **6a** coaxial to the first longitudinal axis **X,** suitable to receive the driven shaft **3.**

The aforementioned hole **6a** may be integrally joined to the driven shaft **3** by means of a snap-fit coupling, screw means, insertion by interference or any other known technique.

Advantageously, this enables connecting the first coupling element **4** to the driven shaft **3** replacing a coupling element of the type used in the prior art for a direct connection with the driving shaft.

According to a variant embodiment of the invention, the first coupling element **4** is obtained as an integral part of the driven shaft **3** and the aforementioned first rotational constraint means **6** are obtained by means of the structural continuity between the aforementioned two elements.

In any case, the first coupling element **4** is provided with a second end **4b,** juxtaposed to the aforementioned first end **4a** and corresponding to a second of the aforementioned cylindrical portions.

The second end **4b** defines an outer cylindrical surface **7** coaxial to the first longitudinal axis **X** and an end surface **4c** orthogonal to such axis delimiting the first coupling element **4.**

The aforementioned outer cylindrical surface **7** is configured to be coupled to a bearing **15,** schematically represented in fig. 3, along a first portion of the first longitudinal axis **X.**

More precisely the geometry of the outer cylindrical surface **7,** in particular the geometric tolerances and roughness, is compatible with the coupling of the aforementioned bearing **15.**

The aforementioned second end **4b** also comprises coupling means **8** for transmitting the torque between the first coupling element **4** and the driving shaft **2.**

Preferably, the first coupling element **4** comprises an abutment surface **16** orthogonal to the first longitudinal axis **X,** which delimits the aforementioned outer cylindrical surface **7** on the side facing towards the first end **4a** and which defines an abutment for mounting the bearing **15.**

The aforementioned abutment surface **16** may belong to a further cylindrical portion of the first coupling element **4,** adjacent to the aforementioned second portion and having a greater a diameter with respect thereto.

According to the invention, the coupling means **8** comprise one or more recesses **9, 10** defined on the outer cylindrical surface **7,** extending according to the first longitudinal axis **X** from the end surface **4c** towards the first end **4a** along at least one part of the aforementioned first portion.

The coupling **1** represented in the figures shows two of the aforementioned recesses **9** and **10,** but, obviously, variant embodiments of the invention may provide for any number of such recesses, preferably but not necessarily distributed uniformly on the circumference of the outer cylindrical surface **7.** The recesses **9, 10** enable the transmission of the torque between the first coupling element **4** and a second coupling element **5** developed according to a respective second longitudinal axis **Y.**

Preferably, the second coupling element **5** is made up of a succession of cylindrical portions of different diameter and coaxial to the second longitudinal axis **Y.**

As observable in fig. 1, the second coupling element **5** comprises, along the second longitudinal axis **Y,** a first end **5a** provided with second rotational constraint means **12** for the connection to the driving shaft **2** so that the second longitudinal axis **Y** is coaxial to the axis of the driving shaft **2** and so as to transmit the torque between the two elements.

The second coupling element **5** further comprises a second end **5b** juxtaposed to the previous one and provided with one or more projecting bodies **13, 14** projecting from the second coupling element **5** towards the second longitudinal axis **Y.**

Each of the aforementioned projecting bodies **13, 14** can be conjugated with a respective recess **9, 10** of the first coupling element **4** so as to enable the transmission of the torque between the two coupling elements **4** and **5.**

In particular, the projecting bodies **13, 14** are configured to be inserted into respective recesses **9, 10** when the two coupling elements **4, 5** are arranged with the respective longitudinal axis **X, Y** coaxial to each other.

It should be observed that obtaining the coupling **1** as two elements, one constrainable to the driving shaft **2** and the other constrainable to the driven shaft **3,** enables obtaining all the advantages of the couplings of the prior art described previously.

In addition, the fact that the recesses **9, 10** are obtained on the outer cylindrical surface **7** which is coupled to the bearing **15** and, thus, at least they partly extend into the latter, enables exploiting the space inside the bearing to receive the projecting bodies **13, 14** of the second coupling element **5.**

This enables attaining the object of maintaining the overall dimension of the coupling **1** within the limits of that corresponding to a direct connection, in which there is present a single coupling element between the driving shaft **2** and the driven shaft **3.**

In particular, with reference to a standard speed reducer of the known type, the coupling **1** can be ideally obtained by disassembling the component of the speed reducer connecting the driven shaft **3** to the driving shaft **2** in two parts at the portion arranged in the bearing **15,** the aforementioned two parts respectively corresponding to the two coupling elements **4** and **5.**

Thus, the coupling element **4** may advantageously be mounted in the speed reducer replacing the aforementioned component, without requiring replacing any other of the components of the reducer, including the bearing **15.**

It should be observed that the geometrical shape described above is particularly simple, enabling reducing the costs for manufacturing the coupling **1** with respect to the couplings of the known type and thus attaining another object of the invention.

As regards the shape of the recesses **9, 10,** at least one of them has a uniform cross-section according to a development direction **Z** perpendicular to the first longitudinal axis **X.**

Preferably, there are present at least two of the aforementioned recesses **9, 10,** mutually juxtaposed with respect to a reference plane **W** passing through the first longitudinal axis **X** and developing with uniform sections according to corresponding development directions **Z** parallel to each other. Advantageously, the aforementioned construction enhances the effectiveness of the transfer of the torque through the coupling **1.**

In this case, the respective projecting bodies **13, 14** of the second coupling element **5** are contained in a cylindrical volume coaxial to the second longitudinal axis **Y** and having a smaller diameter with respect to the diameter of the outer cylindrical surface **7** of the first coupling element **4.** Advantageously, the aforementioned configuration guarantees the presence of a radial clearance between the projecting bodies **13, 14** and the bearing **15,** so as to facilitate the coupling between them.

Evidently, the surfaces laterally delimiting the projecting bodies **13, 14** may also coincide with the surface of the aforementioned cylindrical volume, which, in this case, may coincide with the outer surface of one of the cylindrical portions forming the second coupling element **5.**

Purely by way of example, the aforementioned cylindrical volume has a diameter of a few tenths of millimetres smaller than the diameter of the outer cylindrical surface **7.**

Preferably, the aforementioned two recesses **9, 10** are aligned according to a common development direction **Z** and they have the same cross-section. Advantageously, this enables obtaining both recesses **9, 10** through a single operation of removing the material, for example by milling.

The aforementioned milling enables obtaining a single straight notch extending over the entire diameter of the outer cylindrical surface **7,** whose juxtaposed ends respectively define the two recesses **9** and **10.**

Thus, advantageously, the aforementioned construction enables obtaining the first coupling element **4** in a simple manner through mechanical machining, without requiring using moulding equipment.

Evidently, the advantage outlined above can also be obtained with a greater number of recesses **9, 10,** aligned two by two according to respective development directions **Z** according to the description outlined above.

The aforementioned advantage can also be obtained for a second coupling element **5** configured to be coupled to a first coupling element **4** with two aligned recesses **9, 10** of the type described above.

As a matter of fact, the two respective projecting bodies **13** and **14** may be obtained by removing the two lateral areas with respect to the projecting bodies **13, 14** through two milling operations.

The possibility of obtaining one or both of the coupling elements **4, 5** by means of mechanical machining enables directly obtaining them from a stainless-steel bar, so as to extend the use of the coupling **1** to applications that require particular resistance to corrosion and/or frequent cleaning.

Preferably, though not necessarily, the cross-section of each recess **9, 10** is rectangular, so that each recess is delimited by two juxtaposed parallel surfaces.

Advantageously, the aforementioned rectangular shape of the recesses **9, 10** guarantees the transmission of the torque even in presence of slight changes in the mutual axial position of the two coupling elements **4** and **5.**

As regards the second rotational constraint means **12** between the second coupling element **5** and the driving shaft **2,** they preferably comprise a through hole **11,** coaxial to the second longitudinal axis **Y** and suitable to receive the driving shaft **2,** and connection means arranged inside the through hole **11** to transmit the torque between the driving shaft **2** and the through hole **11.** Preferably, the aforementioned connection means comprise a seat **12a** for a tab, extending over the entire length of the second coupling element **5** according to the direction of the second longitudinal axis **Y** and along one of the aforementioned projecting bodies **13, 14.**

Advantageously, the aforementioned configuration enables using a tab of standard dimensions simultaneously maintaining the length of the second coupling element **5** in the limits of that corresponding to a direct connection, given that the tab is partly received in the bearing **15.**

For this purpose, the second end **4b** of the first coupling element **4** preferably comprises a hole **17** coaxial to the first longitudinal axis **X** for receiving the end of the driving shaft **2.**

The aforementioned hole **17** enables receiving the end of the driving shaft **2** which could project from the through hole **11** of the second coupling element **5** towards the second end **5b** of the latter should the coupling occur through the aforementioned tab.

Preferably, the hole **17** extends along the first longitudinal axis **X** over the entire length of the recesses **9, 10.**

Preferably, the aforementioned hole **17** has a greater diameter with respect to the diameter of the through hole **11,** so as to facilitate the insertion of the driving shaft **2.**

Due to the aforementioned hole **17,** the second end **4b** assumes the shape of a cylindrical wall interrupted by the recesses **9, 10,** as observable in fig. 2.

According to a variant embodiment not illustrated in the drawings, the aforementioned connection means between the through hole **11** and the driving shaft **2** comprise a deformable portion of the second coupling element **5,** configured to enable the reduction of the diameter of the through hole **11.**

In addition, the aforementioned deformable portion is provided with screw means that can be activated to reduce the diameter of the aforementioned through hole **11.**

The latter variant embodiment, which can also be used in combination with the previous one, enables applying the coupling **1** to driving shafts without using a tab, or using a tab whose length is smaller than the standard one for a given diameter of the driving shaft **2.**

As previously mentioned, the aforementioned coupling **1** is particularly suitable for use in a unit for transmitting the torque between a driven shaft **3** and a driving shaft **2.**

In particular, the first coupling element **4** of the coupling **1** is associated to the driven shaft **3** and it is supported by a bearing **15** coupled to the corresponding outer cylindrical surface **7** along the aforementioned first portion of the first longitudinal axis **X.**

Preferably, the aforementioned unit for transmitting the torque is a speed reducer, whose driven shaft **3** forms the input shaft.

In the light of the above, it is clear that the coupling described above attains all preset objects.

In particular, the fact that the recesses of the first coupling element are attained inside the outer cylindrical surface which supports the bearing enables attaining a coupling whose overall dimension does not exceed the one corresponding to a direct connection between the driving shaft and the driven shaft.

Thus, the coupling is suitable to be supported by the same components, in particular the bearing, used for the direct connection.

In addition, the particular configuration of the coupling enables obtaining it cost-effectively even through a mechanical machining.

## Claims

1. Coupling (1) for the transmission of the torque between a driving shaft (2) and a driven shaft (3), comprising a first coupling element (4) developing according to a first longitudinal axis (X) between a first end (4a) and a second end (4b) juxtaposed to said first end (4a), said second end (4b) defining an end surface (4c) orthogonal to said first longitudinal axis (X) and delimiting said first coupling element (4) and an outer cylindrical surface (7) coaxial to said first longitudinal axis (X) and configured to be coupled to a bearing (15) along a first portion of said first longitudinal axis (X);
said coupling (1) comprising coupling means (8) belonging to said second end (4b) for transmitting the torque between said first coupling element (4) and said driving shaft (2);
said coupling means (8) comprising one or more recesses (9, 10) defined on said outer cylindrical surface (7) and developing according to said first longitudinal axis (X) from said end surface (4c) towards said first end (4a) for at least one part of said first portion;
said first end (4a) being provided with first rotational constraint means (6) for the connection to said driven shaft (3) so that said first longitudinal axis (X) is coaxial to the axis of said driven shaft (3),
and comprising a second coupling element (5) developed according to a second longitudinal axis (Y) between:
- a first end (5a) provided with second rotational constraint means (12) for the connection to said driving shaft (2) in such a way that said second longitudinal axis (Y) is coaxial to the axis of said driving shaft (2);
- a second end (5b) juxtaposed to said first end (5a), provided with one or more projecting bodies (13, 14) projecting from said second coupling element (5) in the direction of said second longitudinal axis (Y), each of which can be conjugated to a corresponding recess (9, 10) of said plurality of recesses (9, 10) to rotatably constrain said second coupling element (5) to said first coupling element (4) when said first coupling element (4) and said second coupling element (5) are arranged with the respective longitudinal axis (X, Y) coaxial,
said second rotational constraint means (12) comprising a through hole (11), coaxial to said second longitudinal axis (Y) and suitable to receive said driving shaft (2), and connection means arranged in said through hole (11) for transmitting the torque between said driving shaft (2) and said through hole (11),
**characterised in that** said connection means comprise a seat for a tab (12a), extending over the entire length of said second coupling element (5) according to the direction of said second longitudinal axis (Y) and along one of said one or more projecting bodies (13, 14).

2. Coupling (1) according to claim 1, **characterised in that** at least one of said one or more recesses (9, 10) has a uniform cross-section according to a development direction (Z) perpendicular to said first longitudinal axis (X).

3. Coupling (1) according to claim 2, **characterised in that** said coupling means (8) comprise two of said recesses (9, 10), mutually juxtaposed with respect to a reference plane (W) passing through said first longitudinal axis (X) and developing according to corresponding development directions (Z) parallel to each other.

4. Coupling (1) according to claim 3, **characterised in that** said two recesses (9, 10) have cross-sections equal to each other and are aligned according to a common development direction (Z).

5. Coupling (1) according to any one of the preceding claims, **characterised in that** said first rotational constraint means (6) comprise a hole (6a) coaxial to said first longitudinal axis (X) and suitable to receive said driven shaft (3).

6. Coupling (1) according to claim 1, **characterised in that** each of said one or more projecting bodies (13, 14) is completely contained in a cylindrical volume coaxial to said second longitudinal axis (Y) and having a smaller diameter with respect to the diameter of said outer cylindrical surface (7).

7. Coupling (1) according to claim 1, **characterised in that** said connection means comprise a deformable portion of said second coupling element (5), configured to allow the reduction of the diameter of said through hole (11), said deformable portion being provided with screw means operable so as to cause said reduction of diameter.

8. Unit for the transmission of the torque between a driven shaft (3) and a driving shaft (2), **characterised in that** it comprises a coupling (1) according to any one of the preceding claims, said first coupling element (4) of said coupling (1) being associated to said driven shaft (3) and there being present a bearing (15) coupled to said outer cylindrical surface (7) along said first portion of said first longitudinal axis (X).

9. Transmission unit according to claim 8, **characterised in that** said first coupling element (4) is fixed to said driven shaft (3).

10. Transmission unit according to any one of claims 8 or 9, **characterised in that** said driven shaft (3) belongs to a speed reducer.

## Patentansprüche

1. Kupplung (1) zur Übertragung des Drehmoments zwischen einer Antriebswelle (2) und einer angetriebenen Welle (3), umfassend ein erstes Kupplungselement (4), das sich entlang einer ersten Längsachse (X) zwischen einem ersten Ende (4a) und einem zweiten Ende (4b), das dem besagten ersten Ende (4a) gegenüber angeordnet ist, entwickelt, wobei das besagte zweite Ende (4b) eine Endoberfläche (4c) definiert, die orthogonal zu der besagten ersten Längsachse (X) liegt und das besagte erste Kupplungselement (4) und eine äußere zylindrische Oberfläche (7) begrenzt, die koaxial zu der besagten ersten Längsachse (X) liegt und konfiguriert ist, um mit einem Lager (15) entlang eines ersten Abschnitts der besagten ersten Längsachse (X) gekoppelt zu werden;
wobei die besagte Kupplung (1) zum besagten zweiten Ende (4b) gehörende Kupplungsmittel (8) zur Übertragung des Drehmoments zwischen dem besagten ersten Kupplungselement (4) und der besagten Antriebswelle (2) aufweist;
wobei die besagten Kupplungsmittel (8) eine oder mehrere Aussparungen (9, 10) aufweisen, die auf der besagten äußeren zylindrischen Oberfläche (7) definiert sind und sich gemäß der besagten ersten Längsachse (X) von der besagten Endoberfläche (4c) in Richtung des besagten ersten Endes (4a) für mindestens einen Teil des besagten ersten Abschnitts entwickeln;
wobei das besagte erste Ende (4a) mit ersten Rotationsbegrenzungsmitteln (6) für die Verbindung mit der besagten angetriebenen Welle (3) versehen ist, sodass die besagte erste Längsachse (X) koaxial zur Achse der besagten angetriebenen Welle (3) liegt,
und ein zweites Kupplungselement (5) aufweist, entwickelt entlang einer zweiten Längsachse (Y) zwischen:
- einem ersten Ende (5a), das mit zweiten Rotationsbegrenzungsmitteln (12) für die Verbindung mit der besagten Antriebswelle (2) derart versehen ist, dass die besagte zweite Längsachse (Y) koaxial zur Achse der besagten Antriebswelle (2) liegt;
- einem zweiten Ende (5b), das dem besagten ersten Ende (5a) gegenüber angeordnet ist und mit einem oder mehreren vorstehenden Körpern (13, 14) versehen ist, die von dem besagten zweiten Kupplungselement (5) in Richtung der besagten zweiten Längsachse (Y) vorstehen, und von denen jeder mit einer entsprechenden Aussparung (9, 10) aus der besagten Vielzahl von Aussparungen (9, 10) gepasst werden kann, um das besagte zweite Kupplungselement (5) drehbar an das besagte erste Kupplungselement (4) zu binden, wenn das besagte erste Kupplungselement (4) und das besagte zweite Kupplungselement (5) mit der jeweiligen Längsachse (X, Y) koaxial angeordnet sind,
wobei die besagten zweiten Rotationsbegrenzungsmittel (12) ein Durchgangsloch (11) umfassen, das koaxial zu der besagten zweiten Längsachse (Y) liegt und geeignet ist, die besagte Antriebswelle (2) aufzunehmen, sowie Verbindungsmittel, die in dem besagten Durchgangsloch (11) angeordnet sind, um das Drehmoment zwischen der besagten Antriebswelle (2) und dem besagten Durchgangsloch (11) zu übertragen, **dadurch gekennzeichnet, dass** die besagten Verbindungsmittel einen Sitz für eine Lasche (12a) umfassen, die sich über die gesamte Länge des besagten zweiten Kupplungselements (5) gemäß der Richtung der besagten zweiten Längsachse (Y) und entlang eines des besagten einen oder der besagten mehreren vorstehenden Körper (13, 14) erstreckt.

2. Kupplung (1) nach Patentanspruch 1, **dadurch gekennzeichnet, dass** mindestens eine der besagten einen oder mehreren Aussparungen (9, 10) einen gleichmäßigen Querschnitt gemäß einer Entwicklungsrichtung (Z) senkrecht zur besagten ersten Längsachse (X) aufweist.

3. Kupplung (1) nach Patentanspruch 2, **dadurch gekennzeichnet, dass** die besagten Kupplungsmittel (8) zwei der besagten Aussparungen (9, 10) umfassen, die in Bezug auf eine Bezugsebene (W), die durch die besagte erste Längsachse (X) verläuft, einander gegenüber angeordnet sind und sich nach entsprechenden, zueinander parallelen Entwicklungsrichtungen (Z) entwickeln.

4. Kupplung (1) nach Patentanspruch 3, **dadurch gekennzeichnet, dass** die besagten zwei Aussparungen (9, 10) zueinander gleiche Querschnitte aufweisen und nach einer gemeinsamen Entwicklungsrichtung (Z) ausgerichtet sind.

5. Kupplung 1) nach jeglichem der vorhergehenden Patentansprüche, **dadurch gekennzeichnet, dass** die besagten ersten Rotationsbegrenzungsmittel 6) ein Loch 6a) aufweisen, das koaxial zu der besagten ersten Längsachse X) liegt und geeignet ist, die besagte angetriebene Welle 3) aufzunehmen.

6. Kupplung (1) nach Patentanspruch 1, **dadurch gekennzeichnet, dass** jeder des besagten einen oder der besagten mehreren vorstehenden Körper (13, 14) vollständig in einem zylindrischen Volumen enthalten ist, das koaxial zu der besagten zweiten Längsachse (Y) liegt und einen kleineren Durchmesser im Verhältnis zum Durchmesser der besagten äußeren zylindrischen Oberfläche (7) aufweist.

7. Kupplung (1) nach Patentanspruch 1, **dadurch gekennzeichnet, dass** die besagten Verbindungsmittel einen verformbaren Abschnitt des besagten zweiten Kupplungselements (5) umfassen, der so konfiguriert ist, dass er die Verringerung des Durchmessers des besagten Durchgangslochs (11) ermöglicht, wobei der besagte verformbare Abschnitt mit Schraubmitteln versehen ist, die so verstellt werden können, dass sie die besagte Verringerung des Durchmessers bewirken.

8. Einheit zur Übertragung des Drehmoments zwischen einer angetriebenen Welle (3) und einer Antriebswelle (2), **dadurch gekennzeichnet, dass** sie eine Kupplung (1) nach jeglichem der vorhergehenden Patentansprüche umfasst, wobei das besagte erste Kupplungselement (4) der besagten Kupplung (1) mit der besagten angetriebenen Welle (3) verbunden ist und ein Lager (15) vorhanden ist, das mit der besagten äußeren zylindrischen Oberfläche (7) entlang des besagten ersten Abschnitts der besagten ersten Längsachse (X) gekoppelt ist.

9. Getriebeeinheit nach Patentanspruch 8, **dadurch gekennzeichnet, dass** das besagte erste Kupplungselement (4) an der besagten angetriebenen Welle (3) befestigt ist.

10. Getriebeeinheit nach jeglichem der Patentansprüche 8 oder 9, **dadurch gekennzeichnet, dass** die besagte angetriebene Welle (3) zu einem Drehzahlminderer gehört.

## Revendications

1. Accouplement (1) pour la transmission du couple entre un arbre moteur (2) et un arbre entraîné (3), comprenant un premier élément d'accouplement (4) se développant selon un premier axe longitudinal (X) entre une première extrémité (4a) et une deuxième extrémité (4b) juxtaposée à ladite première extrémité (4a), ladite deuxième extrémité (4b) définissant une surface d'extrémité (4c) orthogonale par rapport audit premier axe longitudinal (X) et délimitant ledit premier élément d'accouplement (4) et une surface cylindrique extérieure (7) coaxiale audit premier axe longitudinal (X) et configurée de manière à être accouplée à un roulement (15) le long d'une première portion dudit premier axe longitudinal (X);
ledit accouplement (1) comprenant des moyens d'accouplement (8) appartenant à ladite deuxième extrémité (4b) pour transmettre le couple entre ledit premier élément d'accouplement (4) et ledit arbre moteur (2);
lesdits moyens d'accouplement (8) comprenant une ou plusieurs cavités (9, 10) définies sur ladite surface cylindrique extérieure (7) et se développant selon ledit premier axe longitudinal (X) de ladite surface d'extrémité (4c) vers ladite première extrémité (4a) pour au moins une partie de ladite première portion;
ladite première extrémité (4a) étant pourvue de premiers moyens de blocage rotatifs (6) pour la connexion audit arbre entraîné (3) de manière à ce que ledit premier axe longitudinal (X) soit coaxial à l'axe dudit arbre entraîné (3),
et comprenant un deuxième élément d'accouplement (5) développé selon un deuxième axe longitudinal (Y) entre:
- une première extrémité (5a) pourvue de deuxièmes moyens de blocage rotatifs (12) pour la connexion audit arbre moteur (2) de manière à ce que ledit deuxième axe longitudinal (Y) soit coaxial à l'axe dudit arbre moteur (2);
- une deuxième extrémité (5b) juxtaposée à ladite première extrémité (5a), pourvue d'un ou plusieurs corps saillants (13, 14) saillant dudit deuxième élément d'accouplement (5) dans la direction dudit deuxième axe longitudinal (Y), chacun desquels peut être conjugué à une cavité correspondante (9, 10) de ladite pluralité de cavités (9, 10) pour bloquer de manière pivotante ledit deuxième élément d'accouplement (5) audit premier élément d'accouplement (4) quand ledit premier élément d'accouplement (4) et ledit deuxième élément d'accouplement (5) sont disposés coaxiaux par rapport à l'axe longitudinal (X, Y) correspondant,
lesdits deuxièmes moyens de blocage rotatifs (12) comprenant un trou passant (11), coaxial audit deuxième axe longitudinal (Y) et indiqué pour recevoir ledit arbre moteur (2), et des moyens de connexion disposés dans ledit trou passant (11) pour la transmission du couple entre ledit arbre moteur (2) et ledit trou passant (11),
**caractérisé en ce que** lesdits moyens de connexion comprennent un siège pour une languette (12a), s'étendant sur toute la longueur dudit deuxième élément d'accouplement (5) selon la direction dudit deuxième axe longitudinal (Y) et le long un desdits un ou plusieurs corps saillants (13, 14).

2. Accouplement (1) selon la revendication 1, **caractérisé en ce qu'au** moins une desdites une ou plusieurs cavités (9, 10) présente une coupe transversale uniforme selon une direction de développement (Z) perpendiculaire audit premier axe longitudinal (X).

3. Accouplement (1) selon la revendication 2, **caractérisé en ce que** lesdits moyens d'accouplement (8) comprennent deux desdites cavités (9, 10), juxtaposées mutuellement par rapport à un plan de référence (W) passant à travers ledit premier axe longitudinal (X) et se développant selon des directions de développement correspondantes (Z) parallèles entre elles.

4. Accouplement (1) selon la revendication 3, **caractérisé en ce que** lesdites deux cavités (9, 10) présentent des coupes transversales égales entre elles et sont alignées selon une direction de développement commune (Z).

5. Accouplement (1) selon l'une quelconque des revendications précédentes, **caractérisé en ce que** lesdits moyens de blocage rotatifs (6) comprennent un trou (6a) coaxial audit premier axe longitudinal (X) et indiqué pour accueillir ledit arbre moteur (3).

6. Accouplement (1) selon la revendication 1, **caractérisé en ce que** chacun desdits un ou plusieurs corps saillants (13, 14) est complètement contenu dans un volume cylindrique coaxial audit deuxième axe longitudinal (Y) et ayant un diamètre inférieur par rapport au diamètre de ladite surface cylindrique extérieure (7).

7. Accouplement (1) selon la revendication 1, **caractérisé en ce que** lesdits moyens de connexion comprennent une portion déformable dudit deuxième élément d'accouplement (5), configurée de manière à consentir la réduction du diamètre dudit trou passant (11), ladite portion déformable étant dotée de moyens de vissage actionnables de manière à provoquer ladite réduction de diamètre.

8. Groupe pour la transmission du couple entre un arbre entraîné (3) et un arbre moteur (2), **caractérisé en ce qu'il** comprend un accouplement (1) selon l'une quelconque des revendications précédentes, ledit premier élément d'accouplement (4) dudit accouplement (1) étant associé audit arbre entraîné (3) et étant présent un roulement (15) accouplé à ladite surface cylindrique extérieure (7) le long de ladite première portion dudit premier axe longitudinal (X).

9. Groupe de transmission selon la revendication 8, **caractérisé en ce que** ledit premier élément d'accouplement (4) est fixé audit arbre entraîné (3).

10. Groupe de transmission selon l'une quelconque des revendications 8 ou 9, **caractérisé en ce que** ledit arbre entraîné (3) appartient à un réducteur de vitesse.
